# EUROPÄISCHE PATENTANMELDUNG

(11) **EP 1 574 951 A1**
(43) Veröffentlichungstag der Anmeldung: **14.09.2005**
(21) Anmeldenummer: 03405850.3
(22) Anmeldetag: 28.11.2003
(51) Int. Cl.: G06F 9/445

(54) **Verfahren und System für die automatische Konsistenzkontrolle von Applikationsteilen einer verteilten programmierten Applikation**

(71) Anmelder: Swisscom Mobile AG, 3050 Bern (CH)
(72) Erfinder: Cantini, Renato, 1782 Belfaux (CH); Lauper, Eric, 3014 Bern (CH)
(74) Vertreter: Vogel, Dany

(57) **Zusammenfassung**

Es werden ein Verfahren und ein System für die automatische Konsistenzkontrolle von Applikationsteilen (21, 51, N1) einer verteilten programmierten Applikation bereitgestellt, wobei die Applikationsteile (21, 51, N1) auf mehreren verschiedenen durch Kommunikationskanäle verbundenen elektronischen Vorrichtungseinheiten (1, 2, 5, N) wie Kommunikationsendgeräte und Chipkarten installiert sind. Eigenschaftsdatenerzeugungsmodule (22, 52, N2) sind jeweils einem der Applikationsteile (21, 51, N1) zugeordnet, auf einer Vorrichtungseinheit (2, 5, N) installiert, und stellen Eigenschaftsdatensätze bereit, die Angaben über Eigenschaften eines der Applikationsteile (21, 51, N 1) umfassen. Die bereitgestellten Eigenschaftsdatensätze werden von den Eigenschaftsdatenerzeugungsmodulen (22, 52, N2) an mindestens ein Eigenschaftsdatenaggregationsmodul (13, 53, N3) übermittelt und dort aggregiert. Basierend auf den aggregierten Eigenschaftsdatensätzen werden durch ein Konsistenzdatenerzeugungsmodul (14, 54, N4) Konsistenzdaten erzeugt und basierend auf den erzeugten Konsistenzdaten durch ein Konsistenzkontrollmodul (16, N6) ein Entscheid über die Konsistenz der Applikationsteile (21, 51, N1) gefällt. Die Aufteilung der Konsistenzkontrolle in definierte Funktionsschritte, die durch entsprechende Funktionsmodule ausgeführt werden und die unter den Funktionsmodulen übermittelbare definierte Daten erzeugen, ermöglicht eine flexible Ausführung der Konsistenzkontrolle in heterogenen Umgebungen, in welchen Applikationsteile (21, 51, N1) einer Programmapplikation dynamisch auf unterschiedlichste elektronische Vorrichtungseinheiten (2, 5, N) aufgeteilt und installiert werden können.

## Beschreibung

### Technisches Gebiet

Die vorliegende Erfindung betrifft ein Verfahren und ein System für die automatische Konsistenzkontrolle von Applikationsteilen einer verteilten programmierten Applikation. Die Erfindung betrifft insbesondere ein Verfahren und ein System für die automatische Konsistenzkontrolle von Applikationsteilen einer verteilten programmierten Applikation, welche Applikationsteile auf mehreren verschiedenen durch Kommunikationskanäle verbundenen elektronischen Vorrichtungseinheiten des Systems installiert sind.

### Stand der Technik

Bedingt einerseits durch die zunehmend modulare Bauweise von elektronischen Vorrichtungen und andererseits durch die vermehrte Kommunikationsfähigkeit von elektronischen Vorrichtungen ergeben sich immer häufiger heterogene Hardwareplattformen für die Ausführung von verteilten Programmapplikationen, deren einzelne Applikationsteile auf mehreren verschiedenen durch Kommunikationskanäle verbundenen elektronischen Vorrichtungseinheiten installiert sind. Elektronische Vorrichtungseinheiten umfassen beispielsweise Personal Computers (PC), Laptop Computers, Personal Digital Assistants (PDA) und Kommunikationsendgeräte wie Mobilfunktelefone, die jeweils über Prozessoren sowie Daten- und Programmspeicher verfügen, um Applikationsteile zu installieren. Elektronische Vorrichtungseinheiten umfassen zudem auch spezielle funktionale Module, in welchen Applikationsteile installierbar sind und welche mit anderen elektronischen Vorrichtungseinheiten über verdrahtete oder drahtlose Kommunikationskanäle verbindbar sind. Solche funktionalen Module umfassen beispielsweise Speichermodule, Kommunikationsmodule oder Identifizierungsmodule. Die Kommunikationskanäle zur Verbindung von elektronischen Vorrichtungseinheiten umfassen beispielsweise serielle oder parallele kontaktbasierte Geräteschnittstellen, Infrarot-, funkbasierte oder induktive drahtlose Geräteschnittstellen sowie lokale Funknetze. Applikationsteile umfassen unterschiedlichste Ressourcen einer verteilten Programmapplikation beispielsweise Dienste, Scripts, Applets, ausführbare Programmcode, Programmschnittstellen, Benutzerschnittstellenfunktionen, kryptographische Funktionen und Schlüssel, Codierungsfunktionen, Konvertierungsfunktionen, Kompressionsfunktionen, Verrechnungsfunktionen, Daten, Vorlagen und Typendefinitionen von Dokumenten, Multimediafähigkeiten, Speicherkapazität oder Kommunikationskapazität. Da unterschiedlichste elektronische Vorrichtungseinheiten über die Kommunikationskanäle flexibel und dynamisch zu heterogenen Hardwareplattformen verbindbar sind, könnten in entsprechender Weise auch unterschiedliche, in den einzelnen elektronischen Vorrichtungseinheiten installierte Applikationsteile, flexibel und dynamisch zu einer Programmapplikation zusammengeschaltet werden, die aus den einzelnen kooperierenden Applikationsteilen besteht. Da sowohl die elektronischen Vorrichtungseinheiten als auch die Applikationsteile von verschiedenen Herstellern erzeugt werden und unterschiedliche Versionen und Konfigurationen aufweisen können, bleibt die dynamische Verteilung von programmierten Applikationen in solchen heterogenen Umgebungen zwar theoretisch eine technische Möglichkeit, scheitert aber in der Praxis an der fehlenden Konsistenz der Applikationsteile.

### Darstellung der Erfindung

Es ist eine Aufgabe der vorliegenden Erfindung, ein Verfahren und ein System für die automatische Konsistenzkontrolle von Applikationsteilen einer verteilten programmierten Applikation vorzuschlagen, welche die Nachteile des Stands der Technik überwindet und verteilte Programmapplikationen ermöglicht, deren Applikationsteile dynamisch auf mehreren verschiedenen, durch Kommunikationskanäle verbundenen, elektronischen Vorrichtungseinheiten installierbar sind.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass Eigenschaftsdatensätze, die jeweils Angaben über Eigenschaften eines der Applikationsteile umfassen, durch ein Eigenschaftsdatenerzeugungsmodul, das dem betreffenden einen der Applikationsteile zugeordnet auf einer der Vorrichtungseinheiten installiert ist, bereitgestellt werden. Die bereitgestellten Eigenschaftsdatensätze werden von den Eigenschaftsdatenerzeugungsmodulen an mindestens ein Eigenschaftsdatenaggregationsmodul übermittelt. Die empfangenen Eigenschaftsdatensätze werden durch das Eigenschaftsdatenaggregationsmodul aggregiert. Basierend auf den aggregierten Eigenschaftsdatensätzen werden durch ein Konsistenzdatenerzeugungsmodul Konsistenzdaten erzeugt. Schliesslich wird durch ein Konsistenzkontrollmodul, basierend auf den erzeugten Konsistenzdaten, ein Entscheid über die Konsistenz der Applikationsteile gefällt.

Die Aufteilung der Konsistenzkontrolle in definierte Funktionsschritte zur Bereitstellung und Aggregation von Eigenschaftsdatensätzen und zur Erzeugung von Konsistenzdaten und darauf basierenden Entscheidungsfällungen, die durch entsprechende Funktionsmodule ausgeführt werden und die unter den Funktionsmodulen übermittelbare definierte Daten erzeugen, ermöglicht eine flexible Ausführung der Konsistenzkontrolle in heterogenen Umgebungen, in welchen Applikationsteile einer Programmapplikation dynamisch in unterschiedlichsten elektronischen Vorrichtungseinheiten installiert werden. Das heisst, die Funktionsmodule der Konsistenzkontrolle können flexibel auf unterschiedliche Weise auf die Vorrichtungseinheiten aufgeteilt werden, so dass sich unterschiedliche Architekturen realisieren lassen. Das Eigenschaftsdatenaggregationsmodul, das Konsistenzdatenerzeugungsmodul und das Konsistenzkontrollmodul können zum Beispiel gemeinsam in einer der Vorrichtungseinheiten installiert sein, beispielsweise in einem Kommunikationsendgerät. Zudem ist es möglich, ein Eigenschaftsdatenaggregationsmodul gemeinsam mit einem Applikationsteil auf einer der Vorrichtungseinheiten zu installieren und/oder ein Eigenschaftsdatenaggregationsmodul und ein Konsistenzdatenerzeugungsmodul gemeinsam mit einem Applikationsteil auf einer der Vorrichtungseinheiten zu installieren. Über die Grenzen der Vorrichtungseinheiten hinweg kommunizieren die Funktionsmodule über die Kommunikationskanäle zwischen den Vorrichtungseinheiten. Innerhalb einer Vorrichtungseinheit kommunizieren die Funktionsmodule über interne Programmschnittstellen zwischen den Funktionsmodulen. Sowohl die modulare und flexible Architektur der Konsistenzkontrolle als auch die Kommunikationssistenzkontrolle als auch die Kommunikationsfähigkeit der Funktionsmodule untereinander, innerhalb einer Vorrichtungseinheit und zwischen mehreren Vorrichtungseinheiten, ermöglicht insbesondere auch mehrere, beispielsweise auch drei oder mehr Vorrichtungseinheiten mit darauf installierten Applikationsteilen in die Konsistenzkontrolle einzubeziehen.

Vorzugsweise wird beim Installieren oder erstmaligen Ausführen eines der Applikationsteile auf einer der Vorrichtungseinheiten von der betreffenden Vorrichtungseinheit eine Konsistenzkontrollinitiierung an das Eigenschaftsdatenaggregationsmodul übermittelt. Als Reaktion auf die empfangene Konsistenzkontrollinitiierung wird vom Eigenschaftsdatenaggregationsmodul eine Konsistenzkontrollanfrage an die Eigenschaftsdatenerzeugungsmodule übermittelt. Als Antwort auf die empfangene Konsistenzkontrollanfrage werden die bereitgestellten Eigenschaftsdatensätze von den Eigenschaftsdatenerzeugungsmodulen an das Eigenschaftsdatenaggregationsmodul übermittelt. Die Übermittlung der Konsistenzkontrollinitiierung ermöglicht die automatische und konsistente Einleitung der Konsistenzkontrolle über ein hierarchisch übergeordnetes Funktionsmodul, das Eigenschaftsdatenaggregationsmodul. Die Übermittlung der Konsistenzkontrollanfrage durch das übergeordnete Eigenschaftsdatenaggregationsmodul an die Eigenschaftsdatenerzeugungsmodule ermöglicht eine vollständige Erfassung der aktuellen Eigenschaftsdaten aller Applikationsteile, die aktuell an der verteilten Programmapplikation beteiligt sind.

In einer Ausführungsvariante werden die erzeugten Konsistenzdaten von mehreren Konsistenzdatenerzeugungsmodulen an mindestens ein Konsistenzdatenaggregationsmodul übermittelt. Die empfangenen Konsistenzdaten werden durch das Konsistenzdatenaggregationsmodul aggregiert und der Entscheid über die Konsistenz der Applikationsteile wird durch das Konsistenzkontrollmodul, basierend auf den aggregierten Konsistenzdaten, gefällt. Mit dem Konsistenzdatenaggregationsmodul wird eine weitere übergeordnete Hierarchiestufe eingeführt, die ermöglicht, die Konsistenzdaten mehrerer beteiligter Konsistenzdatenerzeugungsmodule zu aggregieren. Dadurch wird eine weitere Flexibilisierung der Architektur der Konsistenzkontrolle, das heisst der Verbindung und Interaktion, der an der Konsistenzkontrolle beteiligten Funktionsmodule, ermöglicht.

Vorzugsweise wird bei einem gefällten negativen Entscheid über die Konsistenz der Applikationsteile von einem Konsistenzsteuermodul eine Installationsanfrage über ein Kommunikationsnetz an eine Applikationsanbietereinheit übermittelt. Mindestens ein von der Installationsanfrage abhängiger Applikationsteil wird von der Applikationsanbietereinheit über das Kommunikationsnetz an das Konsistenzsteuermodul übermittelt. Die Installationsanfrage und die Auslieferung des Applikationsteils von der Applikationsanbietereinheit über das Kommunikationsnetz an eine Vorrichtungseinheit ermöglicht die dynamische Aktualisierung und Verbesserung der Konsistenz der Applikationsteile, die an der verteilten Programmapplikation beteiligt sind.

In einer Ausführungsvariante werden ein Kommunikationsendgerät und mit Prozessoren und Speicherelementen versehene Chipkarten als Vorrichtungseinheiten verwendet, und die Chipkarten werden über kontaktbehaftete oder kontaktlose Kommunikationskanäle mit dem Kommunikationsendgerät verbunden. Das Kommunikationsendgerät ist beispielsweise ein mobiles Kommunikationsendgerät, das für die Kommunikation über Mobilfunknetze eingerichtet ist, und die Chipkarte ist beispielsweise als Teilnehmeridentifizierungsmodul eingerichtet. Diese konkrete Ausführungsvariante ermöglicht die Konsistenzkontrolle von Programmapplikationen, die über ein Mobilfunktelefon eine damit verbundene SIM-Karte (Subscriber Identity Module) und gegebenenfalls über weitere Speicher- und Prozessormodule verteilt sind, die mit dem Mobilfunktelefon über Geräteschnittstellen verbindbar sind.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:

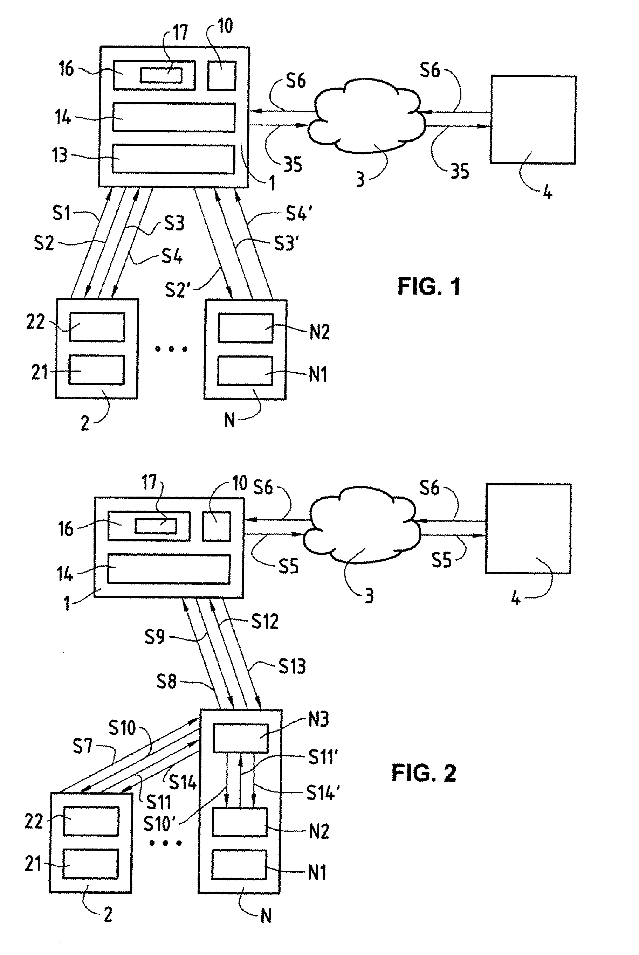

Figur 1 zeigt ein Blockdiagramm, welches schematisch den Datenfluss zwischen den an der Konsistenzkontrolle beteiligten Funktionsmodulen illustriert, die in mehreren über Kommunikationskanäle verbundenen Vorrichtungseinheiten des Systems installiert sind, wobei eine der Vorrichtungseinheiten ein Eigenschaftsdatenaggregationsmodul aufweist und über ein Telekommunikationsnetz mit einer Applikationsanbietereinheit verbunden ist.
Figur 2 zeigt ein Blockdiagramm, in welchem im Unterschied zur Figur 1 eine Anordnung dargestellt wird, in welcher sich das Eigenschaftsdatenaggregationsmodul in einer der Vorrichtungseinheiten des Systems befindet, die nicht über das Telekommunikationsnetz mit der Applikationsanbietereinheit verbunden ist.

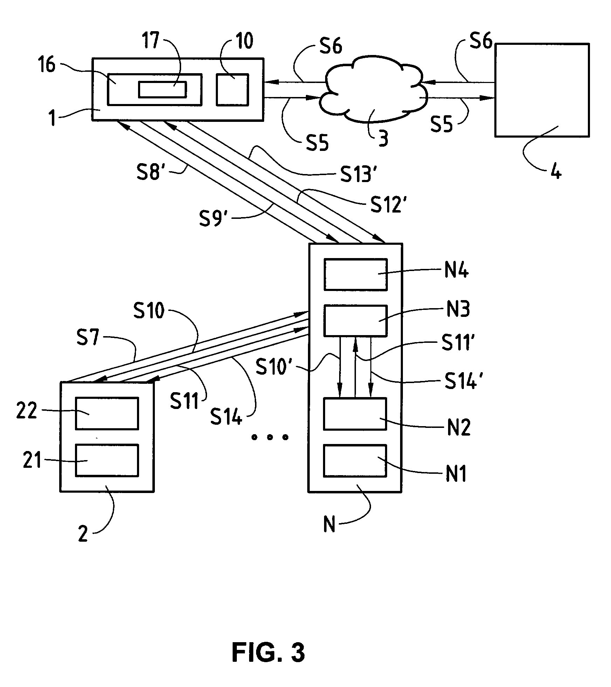

Figur 3 zeigt ein Blockdiagramm, in welchem im Unterschied zur Figur 2 eine Anordnung dargestellt wird, in welcher sich sowohl das Eigenschaftsdatenaggregationsmodul als auch ein Konsistenzdatenerzeugungsmodul in einer der Vorrichtungseinheiten des Systems befindet, die nicht über das Telekommunikationsnetz mit der Applikationsanbietereinheit verbunden ist.

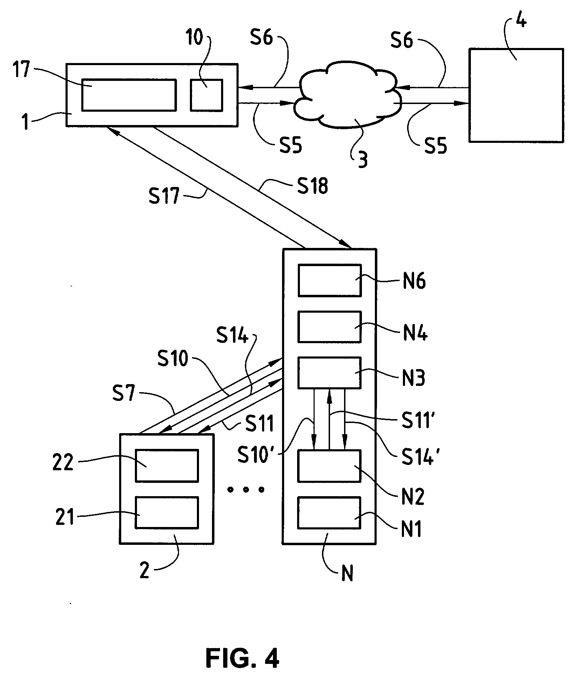

Figur 4 zeigt ein Blockdiagramm, in welchem im Unterschied zur Figur 3 eine Anordnung dargestellt wird, in welcher sich das Eigenschaftsdatenaggregationsmodul, das Konsistenzdatenerzeugungsmodul und ein Konsistenzkontrollmodul in einer der Vorrichtungseinheiten des Systems befindet, die nicht über das Telekommunikationsnetz mit der Applikationsanbietereinheit verbunden ist.

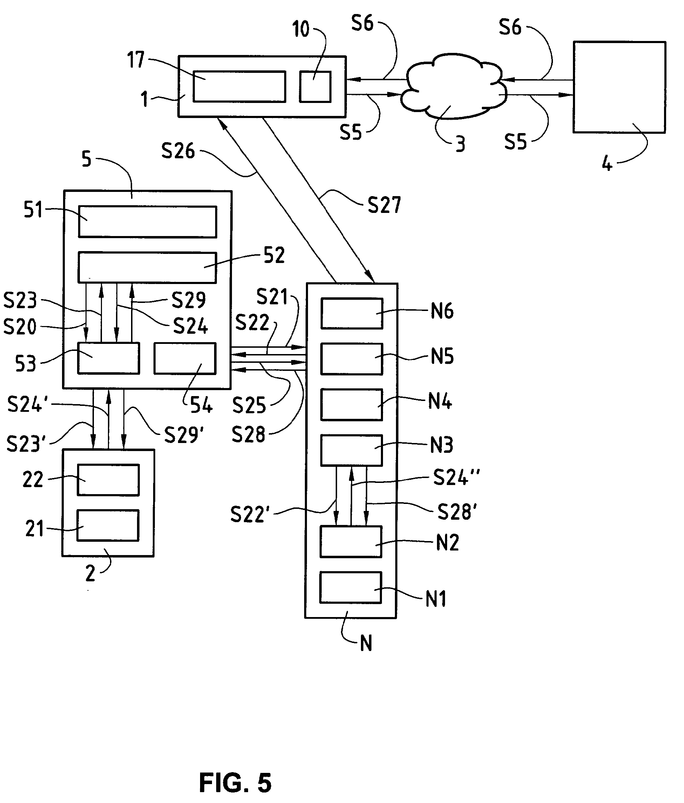

Figur 5 zeigt ein Blockdiagramm, welches schematisch den Datenfluss zwischen den an der Konsistenzkontrolle beteiligten Funktionsmodulen illustriert, die in vier über Kommunikationskanäle verbundenen Vorrichtungseinheiten des Systems installiert sind, wobei eine der Vorrichtungseinheiten über ein Telekommunikationsnetz mit einer Applikationsanbietereinheit verbunden ist und wobei in den anderen der Vorrichtungseinheiten jeweils ein Applikationsteil installiert ist.

### Wege zur Ausführung der Erfindung

In den Figuren 1 bis 5 werden einander entsprechende Komponenten und Schritte durch gleiche Bezugszeichen bezeichnet.

In den Figuren 1 bis 5 bezeichnet das Bezugszeichen 1 eine als Kommunikationsendgerät ausgeführte elektronische Vorrichtungseinheit mit einem Kommunikationsmodul 10 zur Verbindung mit dem Telekommunikationsnetz 3. Das Telekommunikationsnetz 3 umfasst ein Mobilfunknetz und/oder ein Festnetz. Das Mobilfunknetz ist beispielsweise ein GSM- (Global System for Mobile Communication) oder ein UMTS-Netz (Universal Mobile Telephone System) oder ein anderes, beispielsweise satellitenbasiertes Mobilfunknetz oder ein WLAN-Netz (Wireless Local Area Network). Das Festnetz ist beispielsweise das öffentliche geschaltete Telefonnetz, ein ISDN-Netz (Integrated Services Digital Network) oder das Internet. Dementsprechend ist die als Kommunikationsendgerät ausgestaltete Vorrichtungseinheit 1 ein Mobilfunktelefon oder ein Laptop- oder PDA-Computer (Personal Digital Assistant) mit einem Kommunikationsmodul 10 für die Kommunikation über ein Mobilfunknetz, oder ein Kommunikationsendgerät mit einem Kommunikationsmodul 10 für die Kommunikation über ein Festnetz, beispielsweise ein PC (Personal Computer).

In den Figuren 1 bis 5 bezeichnet das Bezugszeichen 4 eine mit dem Telekommunikationsnetz 3 verbundene computerbasierte Applikationsanbietereinheit. Die Applikationsanbietereinheit 4 umfasst einen oder mehrere Computer, die durch ein Softwareprogramm gesteuert werden. Die Applikationsanbietereinheit 4, respektive ihr Softwareprogramm, ist so eingerichtet, dass in der Applikationsanbietereinheit 4 Installationsanfragen entgegengenommen werden, die in den mit S5 bezeichneten Schritten von der Vorrichtungseinheit 1 über das Telekommunikationsnetz 3 an die Applikationsanbietereinheit 4 übermittelt werden. Eine Installationsanfrage umfasst Informationen zur Adressierung der Vorrichtungseinheit 1 sowie Informationen zur Identifizierung eines oder mehrerer Applikationsteile. Beispiele von Applikationsteilen wurden in der Einleitung angeführt. Als Antwort auf eine empfangene Installationsanfrage übermittelt die Applikationsanbietereinheit 4 im Schritt S6 basierend auf den in der Installationsanfrage enthaltenen Informationen eines oder mehrere Applikationsteile über das Telekommunikationsnetz 3 an das Kommunikationsmodul 10 der Vorrichtungseinheit 1.

In den Figuren 1 bis 5 bezeichnen die Bezugszeichen 2 und N elektronische Vorrichtungseinheiten, die über Kommunikationskanäle mit der als Kommunikationsendgerät ausgestalteten Vorrichtungseinheit 1 verbindbar sind. In den Figuren 1 bis 4 soll durch die drei dargestellten Punkte "..." angedeutet werden, dass durchaus mehr als die dargestellten zwei elektronischen Vorrichtungseinheiten 2, N über Kommunikationskanäle mit der Vorrichtungseinheit 1 verbindbar sind. In der Figur 5 ist eine weitere elektronische Vorrichtungseinheit 5 dargestellt, die über einen Kommunikationskanal mit der Vorrichtungseinheit 1 verbindbar ist. Die elektronischen Vorrichtungseinheiten 2, 5, N umfassen Prozessoren und/oder Daten- und Programmspeicher, in denen Applikationsteile 21, 51, N1 installierbar und/oder ausführbar sind. Die elektronischen Vorrichtungseinheiten 2, 5, N sind beispielsweise als Chipkarten, insbesondere als SIM-Karten, Speichermodule oder Kommunikationsmodule ausgeführt, die über Kontakt-, Draht- oder Kabelverbindungen mit der Vorrichtungseinheit 1 verbindbar sind. Zur Verbindung mit der Vorrichtungseinheit 1 können die elektronischen Vorrichtungseinheiten 2, 5, N auch mit drahtlosen Geräteschnittstellen, beispielsweise Infrarot-, funkbasierte (z.B. Bluetooth), optische oder induktive Geräteschnittstellen, oder mit drahtlosen Kommunikationsmodulen, beispielsweise für WLAN-Netze, versehen sein.

Wie in den Figuren 1 bis 5 dargestellt ist, umfassen die Vorrichtungseinheiten 1, 2, 5, N verschiedene funktionale Module zur Ausführung der automatischen Konsistenzkontrolle der Applikationsteile 21, 51, N1, die an einer gemeinsamen verteilten Programmapplikation beteiligt sind. Die elektronischen Vorrichtungseinheiten 1, 2, 5 und N und insbesondere die darauf installierten funktionalen Module bilden das System für die automatische Konsistenzkontrolle der Applikationsteile 21, 51, N1. Die funktionalen Module umfassen neben Kommunikationsmodulen 10 insbesondere Eigenschaftsdatenerzeugungsmodule 22, 52, N2, Eigenschaftsdatenaggregationsmodule 13, 53, N3, Konsistenzdatenerzeugungsmodule 14, 54, N4, Konsistenzdatenaggregationsmodule N5, Konsistenzkontrollmodule N6 und Konsistenzsteuermodule 17. Die funktionalen Module sind vorzugsweise als programmierte Softwaremodule ausgeführt, sie können jedoch auch teilweise oder vollständig hardwaremässig ausgeführt werden. Wie in der nachfolgenden Tabelle 1 ersichtlich ist, sind die funktionalen Module jeweils einer funktionalen Hierarchiestufe respektive Protokollschicht zugeordnet. Wenn die Applikationsteile 21, 51, N1 der untersten Hierarchiestufe "1" zugeordnet werden, sind die funktionalen Module den übergeordneten Hierarchiestufen (oder Protokollschichten) "2" bis "7" zugeordnet.

**Tabelle 1**

| - | Figuren 1 bis 4 | | Figur 5 | |
|---|---|---|---|---|
| Hierarchiestufe | funktionales Modul | Bezugszeichen | funktionales Modul | Bezugszeichen |
| 7 | Konsistenzsteuermodul | 17 | Konsistenzsteuermodul | 17 |
| 6 | Konsistenzkontrollmodul | 16 oder N6 | Konsistenzkontrollmodul | N6 |
| 5 | | | Konsistenzdatenaggregationsmodul | N5 |
| 4 | Konsistenzdatenerzeugungsmodul | 14 oder N4 | Konsistenzdatenerzeugungsmodul | 54, N4 |
| 3 | Eigenschaftsdatenaggregationsmodul | 13 oder N3 | Eigenschaftsdatenaggregationsmodul | 13, 53, N3 |
| 2 | Eigenschaftsdatenerzeugungsmodul | 22, N2 | Eigenschaftsdatenerzeugungsmodul | 22, 52, N2 |

Zwischen den funktionalen Modulen werden Daten und/oder Instruktionen so ausgetauscht, dass die Daten und/oder Instruktionen von einem ersten funktionalen Modul an das verfügbare zweite Modul übermittelt werden, das direkt erreichbar ist und der nächsten Hierarchiestufe zugeordnet ist, die der Hierarchiestufe des ersten Moduls übergeordnet oder untergeordnet ist. Die Daten und/oder Instruktionen werden, ähnlich wie im Schichtenmodell des OSI-Referenzmodells (Open Systems Interconnection), von einem tieferen funktionalen Modul an ein höheres funktionales Modul respektive von einem höheren funktionalen Modul an ein tieferes funktionales Modul weitergereicht, wobei die Daten und/oder Instruktionen in den Modulen jeweils vor der Weitergabe entsprechend den zugeordneten Funktionen des betreffenden Moduls bearbeitet werden. Über die Grenzen der Vorrichtungseinheiten 1, 2, 5, N hinweg kommunizieren die funktionalen Module über die erwähnten Kommunikationskanäle zwischen den Vorrichtungseinheiten 1, 2, 5, N. Innerhalb einer Vorrichtungseinheit 1, 2, 5, N kommunizieren die funktionalen Module über interne Programmschnittstellen zwischen den funktionalen Modulen. Innerhalb einer Vorrichtungseinheit 1, 2, 5, N wird die Verfügbarkeit von funktionalen Modulen beispielsweise mittels Registrierungsmechanismen kontrolliert, welche ermöglichen, aktive funktionale Module in einer lokalen Datenstruktur einzutragen, beispielsweise in einer Tabelle. Die Verfügbarkeit von externen funktionalen Modulen, ausserhalb einer betreffenden Vorrichtungseinheit 1, 2, 5, N, wird beispielsweise anhand von Verfügbarkeitsmeldungen festgestellt, die durch die Vorrichtungseinheiten 1, 2, 5, N periodisch oder auf Anfrage ausgetauscht oder verbreitet werden. Ähnliche Mechanismen sind beispielsweise aus selbstorganisierenden lokalen Netzen oder Netzwerkroutern bekannt.

Wie in den Figuren 1 bis 5 dargestellt ist, ist dem Applikationsteil 21, 51, N1 einer Vorrichtungseinheit 1, 2, 5, N jeweils ein Eigenschaftsdatenerzeugungsmodul 22, 52, N2 zugeordnet. Die Eigenschaftsdatenerzeugungsmodule 22, 52, N2 erzeugen Eigenschaftsdatensätze, die Angaben über Eigenschaften des zugeordneten Applikationsteils 21, 51, N1 umfassen. Die bereitgestellten Eigenschaftsdatensätze werden von einem Eigenschaftsdatenerzeugungsmodul 22, 52, N2 an ein hierarchisch darüberliegendes funktionales Modul übermittelt, vorzugsweise an ein Eigenschaftsdatenaggregationsmodul 13, 53, N3. Die Bereitstellung und Übermittlung der Eigenschaftsdatensätze durch das Eigenschaftsdatenerzeugungsmodul 22, 52, N2 erfolgt vorzugsweise als Antwort auf eine Konsistenzkontrollanfrage, die vom Eigenschaftsdatenaggregationsmodul 13, 53, N3 empfangen wird.

Die in den bereitgestellten Eigenschaftsdatensätzen enthaltenen Eigenschaften eines Applikationsteils 21, 51, N1 umfassen eine Identifizierung des Applikationsteils 21, 51, N1, Angaben über den Ursprung, beispielsweise eine Identifizierung des Herstellers, Angaben über die Vertriebsquelle, beispielsweise eine Identifizierung der Applikationsanbietereinheit 4, Zustandsangaben, beispielsweise ob das betreffende Applikationsteil 21, 51, N1 installiert, initialisiert, personalisiert, blockiert oder gelöscht ist, Versionennummer, Ausgabe- oder Herstellungsdatum, Angaben über unterstützte Schnittstellen, beispielsweise für die Datenkommunikation, Programmschnittstellen, Datenformate oder Dokumententypen, Angaben über die verfügbare Funktionalität, das heisst unterstützte Funktionen, Angaben über Berechtigungen, beispielsweise Rechte spezifische Funktionen auszuführen, Angaben über zeitbezogene Einschränkungen, beispielsweise Gültigkeitsperioden oder Einschränkungen hinsichtlich Zeitpunkt oder Zeitdauer, Angaben über Benutzungsbeschränkungen, beispielsweise Anzahl erlaubter Ausführungen oder Häufigkeit der Ausführungen, Registrierungsinformationen, beispielsweise registrierte Dienste, Benutzerinformationen, Angaben über Ressourcenanforderungen, beispielsweise Speicherplatz, Bandbreite, Sessionen oder Threads, kryptographische Informationen, beispielsweise Schlüsselidentifizierungen und -versionen, Identifizierungen von Sicherheitsgebieten und/oder eine Prüfsumme, beispielsweise ein so genannter kryptographischer Fingerabdruck. Die Prüfsumme kann beispielsweise auf der Basis der Eigenschaften oder des Programmcodes des betreffenden Applikationsteils 21, 51, N1 berechnet werden. Die Eigenschaftsdatensätze können auch mit einer elektronischen Signatur versehen sein, die auf der Basis der Eigenschaften oder des Programmcodes des betreffenden Applikationsteils 21, 51, N1 berechnet wird.

Die Eigenschaftsdatenaggregationsmodule 13, 53, N3 übermitteln Konsistenzkontrollanfragen an Eigenschaftsdatenerzeugungsmodule 22, 52, N2, vorzugsweise als Antwort auf eine Konsistenzkontrollinitiierung, die von einer der Vorrichtungseinheiten 1, 2, 5, N auf Grund der Neuinstallation oder erstmaligen Ausführung eines Applikationsteils 21, 51, N1 auf der betreffenden einen der Vorrichtungseinheiten 1, 2, 5, N an das betreffende Eigenschaftsdatenaggregationsmodul 13, 53, N3 übermittelt wird. Die Eigenschaftsdatenaggregationsmodule 13, 53, N3 aggregieren die von mehreren Eigenschaftsdatenerzeugungsmodulen 22, 52, N2 empfangenen Eigenschaftsdatensätze und leiten die aggregierten Daten an ein Konsistenzdatenerzeugungsmodul 14, 54, N4 weiter.

Die Konsistenzdatenerzeugungsmodule 14, 54, N4 erzeugen, basierend auf den aggregierten Eigenschaftsdatensätzen, Konsistenzdaten, die qualitative und quantitative Angaben über die Konsistenz der an der verteilten Programmapplikation beteiligten Applikationsteile 21, 51, N1 umfassen. Die Konsistenzdatenerzeugungsmodule 14, 54, N4 leiten die bereitgestellten Konsistenzdaten an ein Konsistenzkontrollmodul 16, N6 oder, wenn mehrere Konsistenzdatenerzeugungsmodule 14, 54, N4 involviert sind, an ein Konsistenzdatenaggregationsmodul N5.

Das Konsistenzdatenaggregationsmodul N5 aggregiert die von mehreren Konsistenzdatenerzeugungsmodulen 14, 54, N4 empfangenen Konsistenzdaten und leitet die aggregierten Konsistenzdaten an ein Konsistenzkontrollmodul 16, N6 weiter.

Die Konsistenzkontrollmodule 16, N6 fällen, basierend auf den empfangenen Konsistenzdaten, die von einem Konsistenzdatenerzeugungsmodul 14, 54, N4 oder von einem Konsistenzdatenaggregationsmodul N5 empfangen wurden, einen Entscheid über die Konsistenz der an der verteilten Programmapplikation beteiligten Applikationsteile 21, 51, N1. Falls eine kritische Inkonsistenz detektiert wurde, brechen die Konsistenzkontrollmodule 16, N6 die weitere Ausführung der automatischen Konsistenzkontrolle ab, beispielsweise mittels einer Abbruchsinstruktion. Die Konsistenzkontrollmodule 16, N6 leiten den gefällten Entscheid an ein Konsistenzsteuermodul 17. Bei einem negativen Entscheid übermitteln die Konsistenzkontrollmodule 16, N6 zudem auch die empfangenen Konsistenzdaten, oder zumindest Teile davon, an das Konsistenzsteuermodul 17. Der Entscheid über die Konsistenz der Applikationsteile 21, 51, N1 basiert auf den in den Eigenschaftsdatensätzen enthaltenen Eigenschaften der Applikationsteils 21, 51, N1 und ist beispielsweise abhängig von der Kompatibilität respektive Rückwärtskompatibilität unterschiedlicher Ausgabeversionen der Applikationsteile 21, 51, N1, von den Sicherheitsanforderungen der verteilten Anwendung und der durch die verteilte Anwendung geleisteten Dienste, von Anforderungen und technischen Einschränkungen der Applikationsanbietereinheit 4, von den verwendeten Vorrichtungseinheiten 1, 2, 5, N, von der Kompatibilität respektive Rückwärtskompatibilität unterschiedlicher Ausgabeversionen der verwendeten Vorrichtungseinheiten 1, 2, 5, N, sowie von der Wahrscheinlichkeit von Änderungen an den Vorrichtungseinheiten oder der Ersetzung von Vorrichtungseinheiten.

Wie in den Figuren 1 bis 3 schematisch dargestellt ist, ist das Konsistenzsteuermodul 17 dem Konsistenzkontrollmodul 16 zugeordnet und befindet sich auf der gleichen Vorrichtungseinheit 1 wie das Konsistenzkontrollmodul 16. Wie in den Figuren 4 und 5 dargestellt ist, kann das Konsistenzsteuermodul 17 aber auch separat vom Konsistenzkontrollmodul N6 auf einer anderen Vorrichtungseinheit 1 installiert sein. Bei einem positiven Entscheid übermittelt das Konsistenzsteuermodul 17 eine Konsistenzkontrollquittierung an die den Applikationsteilen 21, 51, N1 zugeordneten Eigenschaftsdatenerzeugungsmodule 22, 52, N2 und gibt die Ausführung der verteilten Programmapplikation frei. Bei einem negativen Entscheid bestimmt das Konsistenzsteuermodul 17 basierend auf den empfangenen Konsistenzdaten, ob eine Konsistenz der beteiligten Applikationsteile 21, 51, N1 durch zusätzliche oder andere Applikationsteile von der Applikationsanbietereinheit 4 erreicht werden kann. Gegebenenfalls übermittelt das Konsistenzsteuermodul 17 mittels des Kommunikationsmoduls 10 eine entsprechende Installationsanfrage über das Telekommunikationsnetz 3 an die Applikationsanbietereinheit 4, welche, wie oben beschrieben, basierend auf den in der empfangenen Installationsanfrage enthaltenen Informationen einen oder mehrere Applikationsteile über das Telekommunikationsnetz 3 an das anfragende Konsistenzsteuermodul 17 übermittelt. Die empfangenen Applikationsteile werden vom Konsistenzsteuermodul 17 zur Installation an die Eigenschaftsdatenerzeugungsmodule 22, 52, N2 übermittelt, die den bereits installierten inkonsistenten Applikationsteilen 21, 51, N1 zugeordnet sind. Zudem übermittelt das Konsistenzsteuermodul 17 eine Konsistenzkontrollquittierung an die den Applikationsteilen 21, 51, N1 zugeordneten Eigenschaftsdatenerzeugungsmodule 22, 52, N2 und gibt die Ausführung der verteilten Programmapplikation frei.

In den folgenden Abschnitten wird mit Bezug auf die Figuren 1 bis 5 der Datenfluss zwischen den an der Konsistenzkontrolle beteiligten funktionalen Modulen beschrieben.

Wie in der Figur 1 dargestellt ist, wird beim Installieren oder erstmaligen Ausführen des Applikationsteils 21 die automatische Konsistenzkontrolle eingeleitet indem im Schritt S1 von der Vorrichtungseinheit 2 eine Konsistenzkontrollinitiierung an das Eigenschaftsdatenaggregationsmodul 13 übermittelt wird. Die Konsistenzkontrollinitiierung wird beispielsweise durch den Applikationsteil 21 oder das Eigenschaftsdatenerzeugungsmodul 22 oder durch ein anderes programmiertes Modul der Vorrichtungseinheit 2 erzeugt und übermittelt. Als Reaktion auf die empfangene Konsistenzkontrollinitiierung übermittelt das Eigenschaftsdatenaggregationsmodul 13 in den Schritten S2 und S2' jeweils eine Konsistenzkontrollanfrage an die Eigenschaftsdatenerzeugungsmodule 22 und N2. Als Antwort auf die empfangene Konsistenzkontrollanfrage übermitteln die Eigenschaftsdatenerzeugungsmodule 22 und N2 in den Schritten S3 und S3' Eigenschaftsdatensätze mit Eigenschaften der Applikationsteile 21 respektive N1 an das Eigenschaftsdatenaggregationsmodul 13. Wie oben beschrieben, werden die empfangenen Eigenschaftsdatensätze im Eigenschaftsdatenaggregationsmodul 13 aggregiert und vom Konsistenzdatenerzeugungsmodul 14 aus den aggregierten Eigenschaftsdatensätzen Konsistenzdaten erzeugt. Vom Konsistenzkontrollmodul 16 wird, basierend auf den Konsistenzdaten, über die Konsistenz der Applikationsteile 21, N1 entschieden. Nötigenfalls wird die weitere Ausführung der automatischen Konsistenzkontrolle durch das Konsistenzkontrollmodul 16 abgebrochen und durch das Konsistenzsteuermodul 17 von der Applikationsanbietereinheit 4 neue oder zusätzliche Applikationsteile angefordert. Gegebenenfalls werden die neuen oder zusätzlichen Applikationsteile in die Vorrichtungseinheiten 2, N geladen und in den Schritten S4, und S4' eine Konsistenzkontrollquittierung an die Eigenschaftsdatenerzeugungsmodule 22, N2 übermittelt, womit die Konsistenzkontrolle beendet wird.

Die Anordnung der funktionalen Module gemäss der Figur 2 unterscheidet sich von derjenigen der Figur 1 dadurch, dass das Eigenschaftsdatenaggregationsmodul N3 in der Vorrichtungseinheit N angeordnet ist. Die automatische Konsistenzkontrolle wird im Schritt S7 durch eine Konsistenzkontrollinitiierung eingeleitet, die von der Vorrichtungseinheit 2 an das Eigenschaftsdatenaggregationsmodul N3 übermittelt wird. Die Konsistenzkontrollinitiierung wird vom Eigenschaftsdatenaggregationsmodul N3 im Schritt S8 an das Konsistenzdatenerzeugungsmodul 14 weitergeleitet. Als Reaktion übermittelt das Konsistenzdatenerzeugungsmodul 14 im Schritt S9 eine Konsistenzkontrollanfrage an das Eigenschaftsdatenaggregationsmodul N3. In den Schritten S10 und S10' leitet das Eigenschaftsdatenaggregationsmodul N3 jeweils eine Konsistenzkontrollanfrage an die Eigenschaftsdatenerzeugungsmodule 22 und N2. Als Antwort auf die empfangene Konsistenzkontrollanfrage übermitteln die Eigenschaftsdatenerzeugungsmodule 22 und N2 in den Schritten S11 und S11' Eigenschaftsdatensätze mit Eigenschaften der Applikationsteile 21 respektive N1 an das Eigenschaftsdatenaggregationsmodul N3. Die empfangenen Eigenschaftsdatensätze werden durch das Eigenschaftsdatenaggregationsmodul N3 aggregiert und die aggregierten Daten im Schritt S12 an das Konsistenzdatenerzeugungsmodul 14 geleitet. Die basierend auf den aggregierten Eigenschaftsdatensätzen erzeugten Konsistenzdaten werden vom Konsistenzdatenerzeugungsmodul 14, wie oben beschrieben, zur weiteren Verarbeitung an das Konsistenzkontrollmodul 16 geleitet. Gegebenenfalls werden neue oder zusätzliche Applikationsteile in die Vorrichtungseinheiten 2, N geladen und im Schritt S13 eine Konsistenzkontrollquittierung an das Eigenschaftsdatenaggregationsmodul N3 übermittelt. Die Konsistenzkontrollquittierung wird in den Schritten S14, und S14' an die Eigenschaftsdatenerzeugungsmodule 22, N2 übermittelt, womit die Konsistenzkontrolle beendet wird.

Die Anordnung der funktionalen Module gemäss der Figur 3 unterscheidet sich von derjenigen der Figur 2 dadurch, dass auch das Konsistenzdatenerzeugungsmodul N4 in der Vorrichtungseinheit N angeordnet ist. Die Konsistenzkontrollinitiierung wird vom Eigenschaftsdatenaggregationsmodul N3 an das Konsistenzdatenerzeugungsmodul N4 geleitet und von dort im Schritt S8' an das Konsistenzkontrollmodul 16 übermittelt. Als Reaktion übermittelt das Konsistenzkontrollmodul 16 im Schritt S9' eine Konsistenzkontrollanfrage an das Konsistenzdatenerzeugungsmodul N4. Die Konsistenzkontrollanfrage wird vom Konsistenzdatenerzeugungsmodul N4 an das Eigenschaftsdatenaggregationsmodul N3 geleitet, welches sie in den Schritten S10 und S10' an die Eigenschaftsdatenerzeugungsmodule 22 und N2 übermittelt. Die aggregierten Eigenschaftsdatensätze werden vom Eigenschaftsdatenaggregationsmodul N3 an das Konsistenzdatenerzeugungsmodul N4 geleitet, wo darauf basierend die Konsistenzdaten erzeugt werden. Die erzeugten Konsistenzdaten werden vom Konsistenzdatenerzeugungsmodul N4 im Schritt S12', wie oben beschrieben, zur weiteren Verarbeitung an das Konsistenzkontrollmodul 16 übermittelt. Gegebenenfalls werden neue oder zusätzliche Applikationsteile in die Vorrichtungseinheiten 2, N geladen und im Schritt S13' eine Konsistenzkontrollquittierung an das Konsistenzdatenerzeugungsmodul N4 übermittelt. Die Konsistenzkontrollquittierung wird an das Eigenschaftsdatenaggregationsmodul N3 weitergeleitet und in den Schritten S14, und S14' an die Eigenschaftsdatenerzeugungsmodule 22, N2 übermittelt, womit die Konsistenzkontrolle beendet wird.

Die Anordnung der funktionalen Module gemäss der Figur 4 unterscheidet sich von derjenigen der Figur 3 dadurch, dass auch das Konsistenzkontrollmodul N6 in der Vorrichtungseinheit N angeordnet ist. Die Konsistenzkontrollinitiierung wird vom Eigenschaftsdatenaggregationsmodul N3 über das Konsistenzdatenerzeugungsmodul N4 an das Konsistenzkontrollmodul N6 geleitet. Als Reaktion leitet das Konsistenzkontrollmodul N6 eine Konsistenzkontrollanfrage über das Konsistenzdatenerzeugungsmodul N4 an das Eigenschaftsdatenaggregationsmodul N3, welches sie in den Schritten S10 und S10' an die Eigenschaftsdatenerzeugungsmodule 22 und N2 übermittelt. Die aggregierten Eigenschaftsdatensätze werden vom Eigenschaftsdatenaggregationsmodul N3 an das Konsistenzdatenerzeugungsmodul N4 geleitet, wo darauf basierend die Konsistenzdaten erzeugt werden. Die erzeugten Konsistenzdaten werden vom Konsistenzdatenerzeugungsmodul N4 zur Entscheidungsfällung an das Konsistenzkontrollmodul N6 geleitet. Der gefällte Entscheid über die Konsistenz der Applikationsteile 21, N1 wird vom Konsistenzkontrollmodul N6 im Schritt S17 an das Konsistenzsteuermodul 17 übermittelt. Bei einem negativen Entscheid werden im Schritt S17 zudem auch die empfangenen Konsistenzdaten, oder zumindest Teile davon, an das Konsistenzsteuermodul 17 übermittelt. Gegebenenfalls werden neue oder zusätzliche Applikationsteile in die Vorrichtungseinheiten 2, N geladen und im Schritt S18 eine Konsistenzkontrollquittierung an das Konsistenzkontrollmodul N6 übermittelt. Die Konsistenzkontrollquittierung wird über das Konsistenzdatenerzeugungsmodul N4 an das Eigenschaftsdatenaggregationsmodul N3 weitergeleitet und in den Schritten S14, und S14' an die Eigenschaftsdatenerzeugungsmodule 22, N2 übermittelt, womit die Konsistenzkontrolle beendet wird.

In der Anordnung gemäss Figur 5 ist im Unterschied zu den Anordnungen gemäss den Figuren 1 bis 4 eine weitere Vorrichtungseinheit 5 vorgesehen. Die Anordnung der funktionalen Module gemäss der Figur 5 unterscheidet sich von derjenigen der Figur 4 zudem dadurch, dass in der Vorrichtungseinheit N zusätzlich ein Konsistenzdatenaggregationsmodul N5 angeordnet ist. Die Vorrichtungseinheit 5 umfasst einen Applikationsteil 51, ein Eigenschaftsdatenerzeugungsmodul 52, ein Eigenschaftsdatenaggregationsmodul 53 und ein Konsistenzdatenerzeugungsmodul 54. Die automatische Konsistenzkontrolle wird im Schritt S20 durch eine Konsistenzkontrollinitiierung eingeleitet, die von der Vorrichtungseinheit 5 an das Eigenschaftsdatenaggregationsmodul 53 übermittelt wird. Die Konsistenzkontrollinitiierung wird vom Eigenschaftsdatenaggregationsmodul 53 an das Konsistenzdatenerzeugungsmodul 54 weitergeleitet und von dort im Schritt S21 an das Konsistenzdatenaggregationsmodul N5 übermittelt. Die Konsistenzkontrollinitiierung wird vom Konsistenzdatenaggregationsmodul N5 an das Konsistenzkontrollmodul N6 geleitet. Als Reaktion leitet das Konsistenzkontrollmodul N6 eine Konsistenzkontrollanfrage an das Konsistenzdatenaggregationsmodul N5, welches sie einerseits im Schritt S22 an das Konsistenzdatenerzeugungsmodul 54 übermittelt und andererseits über das Konsistenzdatenerzeugungsmodul N4 an das Eigenschaftsdatenaggregationsmodul N3 leitet. Das Konsistenzdatenerzeugungsmodul 54 leitet die Konsistenzkontrollanfrage an das Eigenschaftsdatenaggregationsmodul 53, von wo sie in den Schritten S23 und S23' an die Eigenschaftsdatenerzeugungsmodule 52 respektive 22 übermittelt werden. Das Eigenschaftsdatenaggregationsmodul N3 leitet die Konsistenzkontrollanfrage im Schritt S22' an das Eigenschaftsdatenerzeugungsmodul N2. Als Antwort auf die empfangene Konsistenzkontrollanfrage übermitteln die Eigenschaftsdatenerzeugungsmodule 22 und 52 in den Schritten S24 und S24' Eigenschaftsdatensätze mit Eigenschaften der Applikationsteile 51 respektive 21 an das Eigenschaftsdatenaggregationsmodul 53. Die empfangenen Eigenschaftsdatensätze werden durch das Eigenschaftsdatenaggregationsmodul 53 aggregiert und die aggregierten Daten an das Konsistenzdatenerzeugungsmodul 54 geleitet. Die basierend auf den aggregierten Eigenschaftsdatensätzen erzeugten Konsistenzdaten werden vom Konsistenzdatenerzeugungsmodul 54 an das Konsistenzdatenaggregationsmodul N5 übermittelt. Vom Eigenschaftsdatenerzeugungsmodul N2 werden als Antwort auf die empfangene Konsistenzkontrollanfrage im Schritt S24" Eigenschaftsdatensätze mit Eigenschaften des Applikationsteils N1 direkt oder über das optionale Eigenschaftsdatenaggregationsmodul N3 an das Konsistenzdatenerzeugungsmodul N4 übermittelt. Im Konsistenzdatenerzeugungsmodul N4 werden, basierend auf den (aggregierten) Eigenschaftsdatensätzen, die Konsistenzdaten erzeugt. Die erzeugten Konsistenzdaten werden vom Konsistenzdatenerzeugungsmodul N4 an das Konsistenzdatenaggregationsmodul N5 geleitet. Das Konsistenzdatenaggregationsmodul N5 aggregiert die von den Konsistenzdatenerzeugungsmodule N4 und 54 empfangenen Konsistenzdaten und leitet die aggregierten Daten zur Entscheidungsfällung an das Konsistenzkontrollmodul N6. Der gefällte Entscheid über die Konsistenz der Applikationsteile 21, 51, N1 wird vom Konsistenzkontrollmodul N6 im Schritt S26 an das Konsistenzsteuermodul 17 übermittelt. Bei einem negativen Entscheid werden im Schritt S26 zudem auch die empfangenen Konsistenzdaten, oder zumindest Teile davon, an das Konsistenzsteuermodul 17 übermittelt. Gegebenenfalls werden neue oder zusätzliche Applikationsteile in die Vorrichtungseinheiten 2, 5, N geladen und im Schritt S27 eine Konsistenzkontrollquittierung an das Konsistenzkontrollmodul N6 übermittelt. Die Konsistenzkontrollquittierung wird an das Konsistenzdatenaggregationsmodul N5 weitergeleitet. Vom Konsistenzdatenaggregationsmodul N5 wird die Konsistenzkontrollquittierung einerseits im Schritt S28 an das Konsistenzdatenerzeugungsmodul 54 übermittelt und andererseits über das Konsistenzdatenerzeugungsmodul N4 an das Eigenschaftsdatenaggregationsmodul N3 weitergeleitet. Vom Eigenschaftsdatenaggregationsmodul N3 wird die Konsistenzkontrollquittierung im Schritt S28' an das Eigenschaftsdatenerzeugungsmodul N2 übermittelt. Vom Konsistenzdatenerzeugungsmodul 54 wird die Konsistenzkontrollquittierung an das Eigenschaftsdatenaggregationsmodul 53 weitergeleitet und von dort in den Schritten S29 und S29' an die Eigenschaftsdatenerzeugungsmodule 52 respektive 22 übermittelt, womit die Konsistenzkontrolle beendet wird.

An dieser Stelle soll angeführt werden, dass auch auf der als Kommunikationsendgerät ausgeführten Vorrichtungseinheit 1 Applikationsteile der verteilten Programmapplikation installiert werden können, obwohl dies hier nicht explizit beschrieben wurde. Zudem können die funktionalen Module der Hierarchiestufen 3 bis 7 auch in der Applikationsanbietereinheit 4 installiert und ausgeführt werden, obwohl auch dies hier nicht explizit beschrieben wurde. Zum Beispiel ist es möglich das Konsistenzsteuermodul 17, oder das Konsistenzsteuermodule 17 und das Konsistenzkontrollmodul 16, N6, oder das Konsistenzsteuermodul 17, das Konsistenzkontrollmodul 16, N6 und das Konsistenzdatenaggregationsmodul N5, oder das Konsistenzsteuermodul 17, das Konsistenzkontrollmodul 16, N6, das Konsistenzdatenaggregationsmodul N5 und das Konsistenzdatenerzeugungsmodul 14, 54, N4, oder das Konsistenzsteuermodul 17, das Konsistenzkontrollmodul 16, N6, das Konsistenzdatenaggregationsmodul N5, das Konsistenzdatenerzeugungsmodul 14, 54, N4 und das Eigenschaftsdatenaggregationsmodul 13, 53, N3 in der Applikationsanbietereinheit 4 zu installieren und auszuführen.

## Patentansprüche

1. Verfahren für eine automatische Konsistenzkontrolle von Applikationsteilen (21, 51, N1) einer verteilten programmierten Applikation, welche Applikationsteile (21, 51, N1) auf mehreren verschiedenen durch Kommunikationskanäle verbundenen elektronischen Vorrichtungseinheiten (1, 2, 5, N), installiert sind, **gekennzeichnet durch**
Bereitstellen von Eigenschaftsdatensätzen, die jeweils Angaben über Eigenschaften eines der Applikationsteile (21, 51, N1) umfassen, jeweils **durch** ein Eigenschaftsdatenerzeugungsmodul (22, 52, N2), das dem betreffenden einen der Applikationsteile (21, 51, N1) zugeordnet auf einer der Vorrichtungseinheiten (2, 5, N) installiert ist,
Übermitteln der bereitgestellten Eigenschaftsdatensätze von den Eigenschaftsdatenerzeugungsmodulen (22, 52, N2) an mindestens ein Eigenschaftsdatenaggregationsmodul (13, 53, N3),
Aggregieren der empfangenen Eigenschaftsdatensätze **durch** das Eigenschaftsdatenaggregationsmodul (13, 53, N3),
Erzeugen von Konsistenzdaten basierend auf den aggregierten Eigenschaftsdatensätzen **durch** ein Konsistenzdatenerzeugungsmodul (14, 54, N4), und
Fällen eines Entscheids über die Konsistenz der Applikationsteile (21, 51, N1) basierend auf den erzeugten Konsistenzdaten **durch** ein Konsistenzkontrollmodul (16, N6).

2. Verfahren nach Anspruch 1, **gekennzeichnet durch** Übermitteln einer Konsistenzkontrollinitiierung von einer der Vorrichtungseinheiten (2, 5, N) an das Eigenschaftsdatenaggregationsmodul (13, 53, N3) beim Installieren o-der erstmaligen Ausführen eines der Applikationsteile (21, 51, N1) auf der betreffenden einen der Vorrichtungseinheiten (2, 5, N), Übermitteln einer Konsistenzkontrollanfrage vom Eigenschaftsdatenaggregationsmodul (13, 53, N3) an die Eigenschaftsdatenerzeugungsmodule (22, 52, N2) als Reaktion auf die empfangene Konsistenzkontrollinitiierung, und Übermitteln der bereitgestellten Eigenschaftsdatensätze von den Eigenschaftsdatenerzeugungsmodulen (22, 52, N2) an das Eigenschaftsdatenaggregationsmodul (13, 53, N3) als Antwort auf die empfangene Konsistenzkontrollanfrage.

3. Verfahren nach einem der Ansprüche 1 oder 2, **gekennzeichnet durch** Übermitteln der erzeugten Konsistenzdaten von mehreren Konsistenzdatenerzeugungsmodulen (14, 54, N4) an mindestens ein Konsistenzdatenaggregationsmodul (N5), Aggregieren der empfangenen Konsistenzdaten **durch** das Konsistenzdatenaggregationsmodul (N5), Fällen des Entscheids über die Konsistenz der Applikationsteile (21, 51, N 1 ) basierend auf den aggregierten Konsistenzdaten **durch** das Konsistenzkontrollmodul (16, N6).

4. Verfahren nach einem der Ansprüche 1 bis 3, **gekennzeichnet durch** Übermitteln einer Installationsanfrage von einem Konsistenzsteuermodul (17) über ein Kommunikationsnetz (3) an eine Applikationsanbietereinheit (4) bei einem gefällten negativen Entscheid über die Konsistenz der Applikationsteile (21, 51, N1), und Übermitteln mindestens eines von der Installationsanfrage abhängigen Applikationsteils von der Applikationsanbietereinheit (4) über das Kommunikationsnetz (3) an das Konsistenzsteuermodul (17).

5. Verfahren nach einem der Ansprüche 1 bis 4, **dadurch gekennzeichnet, dass** ein Kommunikationsendgerät als Vorrichtungseinheit (1) verwendet wird, dass mit Prozessoren und Speicherelementen versehene Chipkarten als Vorrichtungseinheiten (2, 5, N) verwendet werden, und dass die letztgenannten Vorrichtungseinheiten (2, 5, N) über kontaktbehaftete oder kontaktlose Kommunikationskanäle mit dem Kommunikationsendgerät verbunden werden.

6. Verfahren nach Anspruch 5, **dadurch gekennzeichnet, dass** ein mobiles für die Kommunikation über Mobilfunknetze eingerichtetes Kommunikationsendgerät verwendet wird, und dass eine als Teilnehmeridentifizierungsmodul eingerichtete Chipkarte verwendet wird.

7. Verfahren nach einem der Ansprüche 5 oder 6, **dadurch gekennzeichnet, dass** das Eigenschaftsdatenaggregationsmodul (13, 53, N3), das Konsistenzdatenerzeugungsmodul (14, 54, N4), und das Konsistenzkontrollmodul (16, N6) gemeinsam im Kommunikationsendgerät installiert werden.

8. Verfahren nach einem der Ansprüche 1 bis 7, **dadurch gekennzeichnet, dass** mindestens ein Eigenschaftsdatenaggregationsmodul (13, 53, N3) gemeinsam mit einem Applikationsteil (21, 51, N 1 ) auf einer der Vorrichtungseinheiten (2, 5, N) installiert wird.

9. Verfahren nach einem der Ansprüche 1 bis 8, **dadurch gekennzeichnet, dass** mindestens ein Eigenschaftsdatenaggregationsmodul (13, 53, N3) und mindestens ein Konsistenzdatenerzeugungsmodul (14, 54, N4) gemeinsam mit einem Applikationsteil (21, 51, N1) auf einer der Vorrichtungseinheiten (2, 5, N) installiert werden.

10. Verfahren nach einem der Ansprüche 1 bis 9, **dadurch gekennzeichnet, dass** mindestens drei Vorrichtungseinheiten (2, 5, N) mit darauf installierten Applikationsteilen (21, 51, N1) verwendet werden.

11. System zur automatischen Konsistenzkontrolle von Applikationsteilen (21, 51, N1) einer verteilten programmierten Applikation, welches mehrere verschiedene durch Kommunikationskanäle verbundene elektronische Vorrichtungseinheiten (1, 2, 5, N) umfasst, auf welchen die Applikationsteile (21, 51, N1) installiert sind, **gekennzeichnet durch**
mehrere Eigenschaftsdatenerzeugungsmodule (22, 52, N2) zum Bereitstellen von Eigenschaftsdatensätzen, die jeweils Angaben über Eigenschaften eines der Applikationsteile (21, 51, N1) umfassen, welche Eigenschaftsdatenerzeugungsmodule (22, 52, N2) jeweils dem betreffenden einen der Applikationsteile (21, 51, N1) zugeordnet auf einer der Vorrichtungseinheiten (2, 5, N) installiert sind,
mindestens ein Eigenschaftsdatenaggregationsmodul (13, 53, N3) zum Entgegennehmen und Aggregieren der von mehreren Eigenschaftsdatenerzeugungsmodulen (22, 52, N2) bereitgestellten Eigenschaftsdatensätze,
mindestens ein Konsistenzdatenerzeugungsmodul (14, 54, N4) zum Erzeugen von Konsistenzdaten basierend auf den aggregierten Eigenschaftsdatensätzen, und
ein Konsistenzkontrollmodul (16, N6) zum Fällen eines Entscheids über die Konsistenz der Applikationsteile (21, 51, N1) basierend auf den erzeugten Konsistenzdaten.

12. System nach Anspruch 11, **dadurch gekennzeichnet, dass** die Vorrichtungseinheiten (2, 5, N) eingerichtet sind beim Installieren oder erstmaligen Ausführen eines der Applikationsteile (21, 51, N 1 ) auf einer betreffenden der Vorrichtungseinheiten (2, 5, N) eine Konsistenzkontrollinitiierung an das Eigenschaftsdatenaggregationsmodul (13, 53, N3) zu übermitteln, dass das Eigenschaftsdatenaggregationsmodul (13, 53, N3) eingerichtet ist als Reaktion auf die empfangene Konsistenzkontrollinitiierung eine Konsistenzkontrollanfrage an die Eigenschaftsdatenerzeugungsmodule (22, 52, N2) zu übermitteln, und dass die Eigenschaftsdatenerzeugungsmodule (22, 52, N2) eingerichtet sind, die bereitgestellten Eigenschaftsdatensätze als Antwort auf die empfangene Konsistenzkontrollanfrage an das Eigenschaftsdatenaggregationsmodul (13, 53, N3) zu übermitteln.

13. System nach einem der Ansprüche 11 oder 12, **gekennzeichnet durch** mindestens ein Konsistenzdatenaggregationsmodul (N5) zum Entgegennehmen und Aggregieren der von mehreren Konsistenzdatenerzeugungsmodulen (14, 54, N4) erzeugten Konsistenzdaten, und **dadurch**, dass das Konsistenzkontrollmodul (16, N6) eingerichtet ist, den Entscheid über die Konsistenz der Applikationsteile (21, 51, N 1) basierend auf den aggregierten Konsistenzdaten zu fällen.

14. System nach einem der Ansprüche 11 bis 13, **gekennzeichnet durch** ein Konsistenzsteuermodul (17) zum Übermitteln einer Installationsanfrage über ein Kommunikationsnetz (3) an eine Applikationsanbietereinheit (4) bei einem gefällten negativen Entscheid über die Konsistenz der Applikationsteile (21, 51, N1) und zum Entgegennehmen mindestens eines von der Installationsanfrage abhängigen Applikationsteils über das Kommunikationsnetz (3) von der Applikationsanbietereinheit (4).

15. System nach einem der Ansprüche 11 bis 14, **dadurch gekennzeichnet, dass** mindestens eine Vorrichtungseinheit (1) als Kommunikationsendgerät ausgeführt ist, dass mindestens eine Vorrichtungseinheit (2, 5, N) als Chipkarte ausgeführt ist, welche Chipkarte mit mindestens einem Prozessor und Speicherelementen versehen ist, und dass die letztgenannte Vorrichtungseinheit (2, 5, N) über kontaktbehaftete oder kontaktlose Kommunikationskanäle mit dem Kommunikationsendgerät verbunden ist.

16. System nach Anspruch 15, **dadurch gekennzeichnet, dass** das Kommunikationsendgerät als mobiles für die Kommunikation über Mobilfunknetze eingerichtetes Kommunikationsendgerät ausgeführt ist, und dass die Chipkarte als Teilnehmeridentifizierungsmodul ausgeführt ist.

17. System nach einem der Ansprüche 15 oder 16, **dadurch gekennzeichnet, dass** das Eigenschaftsdatenaggregationsmodul (13, 53, N3), das Konsistenzdatenerzeugungsmodul (14, 54, N4), und das Konsistenzkontrollmodul (16, N6) gemeinsam im Kommunikationsendgerät installiert sind.

18. System nach einem der Ansprüche 11 bis 17, **dadurch gekennzeichnet, dass** mindestens ein Eigenschaftsdatenaggregationsmodul (13, 53, N3) gemeinsam mit einem Applikationsteil (21, 51, N1) auf einer der Vorrichtungseinheiten (2, 5, N) installiert sind.

19. System nach einem der Ansprüche 11 bis 18, **dadurch gekennzeichnet, dass** mindestens ein Eigenschaftsdatenaggregationsmodul (13, 53, N3) und mindestens ein Konsistenzdatenerzeugungsmodul (14, 54, N4) gemeinsam mit einem Applikationsteil (21, 51, N1) auf einer der Vorrichtungseinheiten (2, 5, N) installiert sind.

20. System nach einem der Ansprüche 11 bis 19, **dadurch gekennzeichnet, dass** auf mindestens drei der Vorrichtungseinheiten (2, 5, N) Applikationsteile (21, 51, N1) installiert sind.
